# DEMANDE DE BREVET EUROPEEN

(11) **EP 2 020 526 A1**
(43) Date de publication de la demande: **04.02.2009**
(21) Numéro de dépôt: 08305379.3
(22) Date de dépôt: 04.07.2008
(51) Int. Cl.: F16D 66/02, F16D 66/00

(54) **Temoin d'usure de garniture de freins et garniture de freins**

(30) Priorité: 24.07.2007 FR 0756702
(71) Demandeur: PEUGEOT CITROËN AUTOMOBILES S.A., 78140 Vélizy Villacoublay (FR)
(72) Inventeur: Camus, Gérard, 92400 Courbevoie (FR)

(57) **Abrégé**

L'invention se rapporte à un témoin d'usure de garniture (20) de frein à disque, caractérisé en ce qu'il comporte un câble (22), dit câble d'alerte, installé sur la garniture de frein de façon telle que :
- une extrémité (32) du câble est fixée solidairement, par un dispositif de fixation (42), dit d'alerte, dans la garniture de frein,
- une extrémité (52) du câble est située à l'extérieur de la garniture de frein
- le dispositif de fixation d'alerte (42) est positionné au niveau d'une zone correspondant à un seuil maximal d'usure (24), de façon que, lors d'une usure de la garniture de frein, l'atteinte de ce seuil provoque une libération de l'extrémité du câble correspondante.

## Description

La présente invention concerne un témoin d'usure de garniture de freins, plus particulièrement destiné à être installé sur des freins à organe de friction, tels que des freins à disque.
Afin de se conformer aux nouvelles règlementations en vigueur, et de faciliter le contrôle de l'état d'usure des garnitures de frein, la présente invention vise à fournir un témoin d'usure tel qu'il permette le contrôle de l'état d'usure des freins sans démontage des roues, en utilisant uniquement des outils standard.
Ce contrôle d'état d'usure peut, par exemple, être effectué régulièrement par un contrôleur, mais il peut également prendre la forme d'un avertissement émis en direction de l'utilisateur du véhicule, par exemple sous forme de signal sonore ou lumineux.

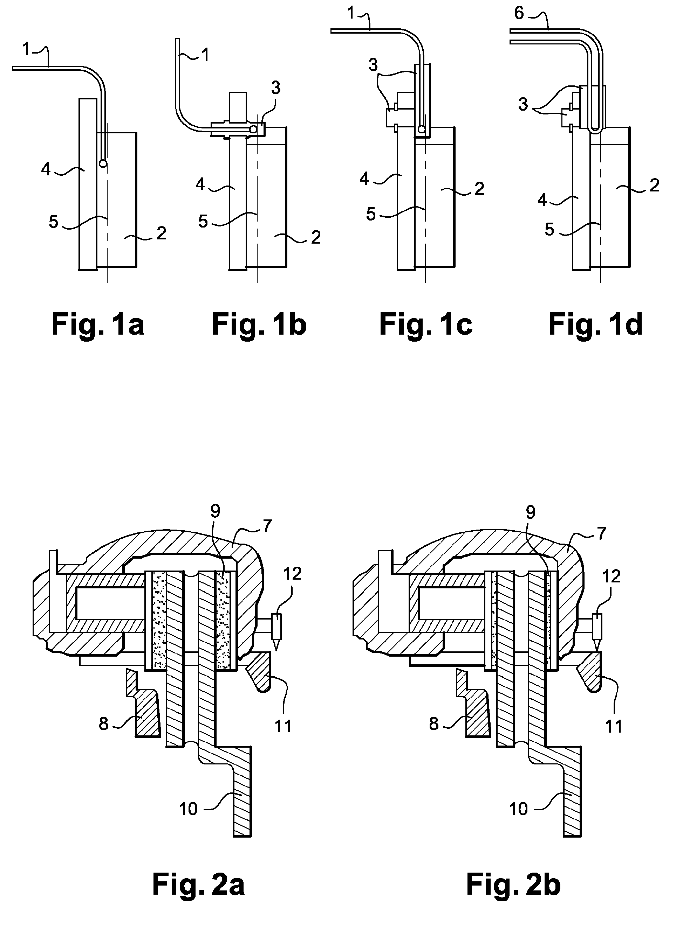

On connaît un certain nombre de témoins d'usure qui utilisent des solutions électriques. Dans ces systèmes, la dégradation d'une garniture de frein s'accompagne de la dégradation d'un conducteur électrique installé dans la garniture, ce qui a pour effet de modifier l'état du circuit.
Dans une première solution, illustrée sur les figures 1a à 1c, on utilise des témoins dits « par contact ». Cette solution consiste à installer un conducteur électrique 1 dans la garniture de frein 2. Le conducteur 1 peut être tout simplement noyé dans la garniture 2, ou installé dans un support 3 fixé au porte-garniture 4. Au sens de la présente invention, le terme noyé signifie que le câble est directement inséré dans la garniture de frein, sans élément intermédiaire.
Lorsque l'usure de la garniture de frein devient trop importante, à savoir lorsque l'extrémité de la garniture atteint la limite 5 représentée en traits pointillées, il y a mise en contact du conducteur électrique 1 avec le disque de frein (non représenté), ce qui crée une fermeture d'un circuit électrique, et le déclenchement d'un signal d'avertissement.
Une autre solution électrique, montrée à la figure 1d, consiste à installer, sur un support 3 fixé au porte-garniture 4, un conducteur 6 compris dans circuit électrique fermé. Lorsque la garniture est usée jusqu'au niveau de la limite 5, le conducteur électrique est dégradé jusqu'à rupture, ce qui a pour effet de provoquer une ouverture du circuit électrique, et le déclenchement d'un signal d'avertissement.
Ces solutions électriques, bien qu'avantageuses en ce qu'elles permettent une information directe et active du conducteur, se révèlent onéreuse et parfois peu fiables, notamment en ce qui concerne les solutions par contact.

En outre, leur mise en oeuvre nécessite une implantation de boucles d'alimentation électrique et de retour de masse dans le train du véhicule et dans les freins, ce qui implique des pertes de coûts et de temps au niveau de la fabrication.

On note ici que, par information active, on qualifie une information communiquée au conducteur sans qu'il soit proactif, c'est à dire sans qu'il n'ait besoin de la demander ou d'aller la chercher.

On connaît également des témoins d'usure basés sur des solutions mécaniques.
Une première solution consiste à permettre une vision directe des garnitures de frein, sans démontage de la roue. Toutefois, cette solution n'est envisageable que dans le cas de jantes alliage très ajourées. Elle n'est donc pas ou peu applicable pour les roues en tôles ou les roues présentant des jantes au dessin particulier. En outre, même dans le cas de jantes alliages ajourées, cette vision directe est souvent compromise par des salissures, projections et autres amalgames de poussière situés dans l'environnement du système de frein. Dans ce cas, il est nécessaire, avant de pouvoir contrôler l'usure des garnitures par vision directe, de procéder au démontage de la roue pour effectuer un nettoyage. Il apparaît donc qu'un tel système ne peut pas constituer une solution acceptable au problème visé qui est de permettre un contrôle sans démontage des roues.
Une autre solution mécanique utilise une configuration similaire à celles précédemment décrites dans le cas des solutions électriques. Elle consiste en effet à placer, dans la garniture, un témoin d'usure tel qu'il entre en contact avec le disque de frein lorsque la garniture atteint une épaisseur minimale. On choisit le témoin d'usure dans un matériau tel que cette mise en contact se traduise par une vibration audible.
Une telle solution présente de nombreux avantages en termes de coût et de simplicité de mise en oeuvre, puisqu'elle consiste en une solution interne au frein.
Toutefois, la fiabilité de l'avertissement n'est pas parfaite et, en outre, l'aspect bruyant de cet avertissement est relativement dévalorisant au niveau de la qualité perçue par l'utilisateur du conducteur.

Une dernière solution, enfin, consiste, dans le cas d'un frein à étrier coulissant, à déterminer l'usure de la garniture à partir du mouvement de l'étrier. En effet, dans un frein à étrier coulissant, tel que montré sur les figures 2a et 2b, un étrier 7 est monté en coulissement sur un élément fixe du frein, appelé chape 8. Cet étrier prend appui, d'un côté, sur une face de la garniture externe 9 de frein. Lors de l'usure des garnitures, l'étrier 7 se déplace sur la chape 8 pour se recentrer sur le disque 10. On a donc envisagé de fixer un index 11 sur la chape du frein, et un repère 12 sur l'étrier du frein. Le repère 12 se déplace donc en fonction de l'usure de la garniture. En conséquence, il est possible de positionner l'index 11 de façon telle que lorsque la garniture est neuve, l'index et le repère ne soient pas alignés, comme montré sur la figure 2a, et qu'un alignement de l'index et du repère comme sur la figure 2b indique une usure de la garniture 9.
Bien que simple et peu onéreuse à mettre en oeuvre, cette solution n'est pas très avantageuse, d'une part parce qu'elle ne peut être utilisée que pour contrôler l'usure de la garniture externe, sans donner d'informations sur l'état de la garniture interne et, d'autre part, parce qu'elle nécessite un accès visuel à la zone de l'index, c'est à dire une accessibilité sous le véhicule.

L'invention vise à remédier, au moins en partie, aux inconvénients susmentionnés, en proposant un témoin d'usure qui permette une information fiable et facile à obtenir sur l'état d'usure, tout en étant simple à mettre en oeuvre, et en respectant les contraintes règlementaires et les contraintes de coûts.

De manière plus précise, l'invention concerne un témoin d'usure de garniture de frein à disque, caractérisé en ce qu'il comporte un câble, dit câble d'alerte, installé sur la garniture de frein de façon telle que :
- une extrémité du câble est fixée solidairement, par un dispositif de fixation, dit d'alerte, dans la garniture de frein,
- une extrémité du câble est située à l'extérieur de la garniture de frein
- le dispositif de fixation d'alerte est positionné au niveau d'une zone correspondant à un seuil maximal d'usure, de façon que, lors d'une usure de la garniture de frein, l'atteinte de ce seuil provoque une libération de l'extrémité du câble correspondante.

Ainsi, pour vérifier l'état d'usure de la garniture de frein, il suffit à un utilisateur ou à un contrôleur d'appréhender l'extrémité de câble située à l'extérieur de la garniture de frein, et d'exercer une légère traction. Si le câble se libère lors de cette traction, cela signifie que l'extrémité du câble située dans la garniture a été libérée au préalable, et donc que la garniture a atteint le seuil maximal d'usure.

L'extrémité du câble est préférentiellement située à l'intérieur du passage de roue. De cette façon, un témoin d'usure selon invention permet de déporter l'information d'usure dans une zone à l'accessibilité simplifiée, permettant un contrôle aisé de l'usure au cours, par exemple, d'une phase de contrôle technique, sans information directe de l'utilisateur en continu.
En outre, un tel témoin permet d'obtenir une information absolue sur le niveau d'usure de la garniture, information qui peut être obtenue en aveugle, c'est à dire sans outillage spécifique et sans accès sous le véhicule.

On a également envisagé la possibilité de disposer d'un témoin permettant de détecter un état intermédiaire d'usure de la garniture, permettant d'avertir le contrôleur que le changement des garnitures de frein, même s'il ne doit pas nécessairement être effectué immédiatement, est à prévoir prochainement.
A cet effet, dans une réalisation avantageuse, le témoin d'usure comporte un second câble, dit câble d'avertissement, installé de façon telle que :
- une extrémité du câble est fixée solidairement, par un dispositif de fixation, dit d'avertissement, dans la garniture de frein,
- une extrémité du câble est située à l'extérieur de la garniture de frein, et
- le dispositif de fixation d'avertissement est positionné au niveau d'une zone correspond à un seuil d'usure d'avertissement, inférieur au seuil maximal d'usure, de façon que, lors d'une usure de la garniture de frein, l'atteinte de ce seuil provoque une libération de l'extrémité du câble correspondante.

Le montage du câble d'avertissement est ainsi similaire à celui de câble d'alerte. Cette réalisation permet donc d'obtenir un système de double témoin, qui permette d'obtenir deux niveaux d'information, à savoir un premier niveau d'avertissement, et un second niveau d'alerte.
Lors d'un contrôle, le contrôleur pourra se trouver face à l'une des trois situations suivantes :
- si les deux câbles sont fixes, cela signifie que la garniture n'est pas, ou peu usée,
- si le câble d'alerte est fixe mais que le câble d'avertissement est libéré, cela signifie que la garniture commence à être usée et doit être changée prochainement, et
- si les deux câbles sont libérés, cela signifie qu'il convient de remplacer immédiatement les garnitures.

De manière générale, on peut utiliser une première configuration dans laquelle chacun des câbles est fixé à la garniture de frein par son propre dispositif de fixation, les deux dispositifs de fixation étant distincts l'un de l'autre.

Toutefois, plusieurs autres configurations sont envisageables pour la réalisation de ce témoin à double niveau d'information. La mise en oeuvre de ces différentes configurations sera explicitée ultérieurement à l'aide des figures.
Dans une deuxième configuration, le dispositif de fixation d'avertissement et le dispositif de fixation d'alerte sont confondus de manière à former un dispositif unique de fixation. Dans ce cas, les câbles d'alerte et d'avertissement sont situés de part et d'autre du dispositif de fixation, le câble d'avertissement étant situé entre le câble d'alerte et le disque de frein.
Dans une troisième configuration, les extrémités de chacun des câbles situées à l'intérieur de la garniture de frein sont liées de manière à former un seul câble. Dans cette réalisation, le dispositif de fixation d'avertissement est positionné au niveau de la liaison entre les deux câbles, et le dispositif de fixation d'alerte est positionné sur le câble d'alerte, entre le dispositif de fixation d'avertissement et le porte-garniture. le dispositif de fixation d'alerte comporte une agrafe maintenue sur le câble d'alerte par un fixé sur le porte-garniture et sur la garniture.
Pour la mise en oeuvre de cette configuration on peut choisir, par exemple, un dispositif de fixation d'alerte comprend une agrafe maintenue sur le câble d'alerte par un support de câbles.

De façon générale, dans certaines réalisations, un témoin d'usure selon l'invention comporte l'une ou l'autre des caractéristiques suivantes, utilisées seules ou en combinaison :
- le dispositif de fixation d'alerte et/ou d'avertissement consiste en un point de sertissage du câble sur la garniture de frein,
- les portions des câbles d'alerte et/ou d'avertissement comprises dans la garniture de frein sont positionnées de façon radiale,
- les portions des câbles d'alerte et/ou d'avertissement comprises dans la garniture de frein sont positionnées de façon axiale, et
- le ou les câbles sont directement noyés dans la garniture.

L'invention concerne également une garniture pour frein à disque, munie d'un témoin d'usure tel que défini précédemment.

Ainsi, le système de détection d'usure défini dans la présente demande permet d'accéder de manière simplifiée à une information absolue sur l'usure de la garniture, sans même disposer d'un accès visuel au système.
D'autre part, ce système est relativement aisé et peu coûteux à mettre en oeuvre dans un véhicule, puisqu'il est entièrement intégré dans le frein. En outre, il est possible d'utiliser les mêmes configurations de garniture que celles existant déjà pour les témoins d'usure électriques, ce qui permet de ne pas engendrer de coûts de développement ou d'adaptation trop importants par rapport aux systèmes actuellement sur le marché.

D'autres avantages et caractéristiques de invention apparaîtront avec la description détaillée de certains de ses modes de réalisation, cette description étant effectuée à titre non limitatif à l'aide des figures sur lesquelles :
- les figures la à 1d, déjà décrites, présentent des témoins d'usure de l'état de l'art, mettant en oeuvre des solutions électriques,
- les figures 2a et 2b, également déjà décrites, présentent un témoin d'usure utilisant le principe du signal d'index,
- les figures 3 et 4 présentent, respectivement, les première et deuxième configurations de l'invention telles que précédemment définies,
- les figures 5 à 9 présentent la troisième configuration précédemment décrite.

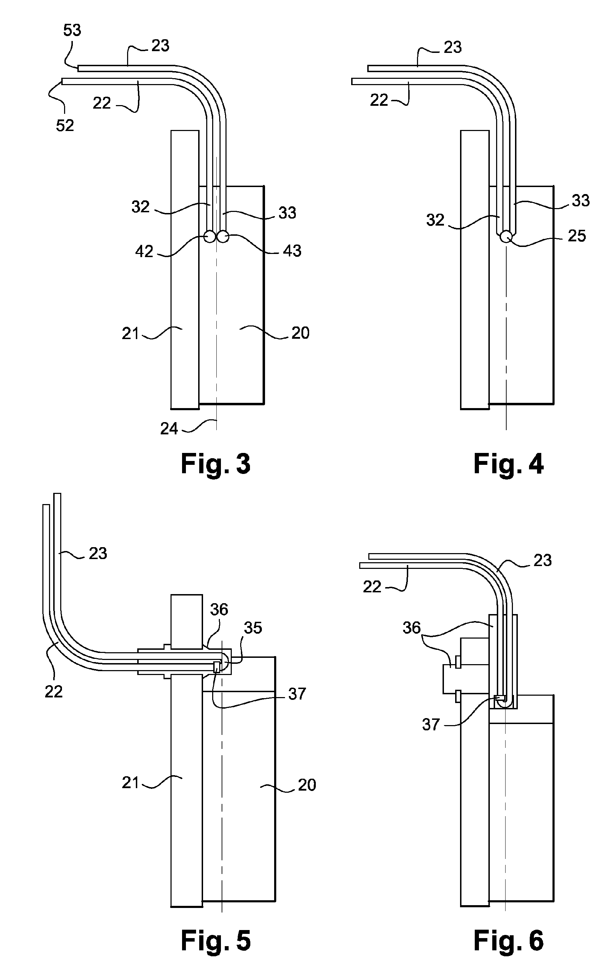

La figure 3 montre un témoin d'usure selon l'invention installé sur une garniture de frein 20. Cette garniture est supportée par un porte-garniture 21. Dans cette première configuration, le témoin d'usure comporte un câble d'alerte 22 et un câble d'avertissement 23. Pour chacun de ces câbles, une extrémité 32 (resp. 33) est fixée à l'intérieur de la garniture de frein via un point de fixation 42 (resp. 43), par exemple un point de sertissage, tandis que l'autre extrémité 52 (resp. 53) est située à l'extérieur de la garniture. Lorsque cette garniture est installée sur un frein à disque, elle s'use dans la direction indiquée par la flèche horizontale. Le seuil maximal d'usure est indiqué par la ligne pointillée 24.
Ainsi, lorsque la face interne de la garniture, c'est à dire celle située près du disque de frein, atteint le niveau du premier point de fixation 43, il y a une mise en contact de ce point de fixation avec le disque, provoquant une friction ayant pour effet de détruire le point de fixation 43 et ainsi de libérer l'extrémité 33 du câble d'avertissement 23.
On atteint alors le premier niveau d'information puisque, si un contrôle est effectué à cet instant, par exemple en tirant sur l'autre extrémité 53 du câble d'avertissement 23 ou en observant visuellement si ce câble 23 est libéré de la garniture 20, le contrôleur saura que l'usure de la garniture est déjà relativement avancée.
Lorsque la face interne de la garniture atteint le seuil maximal d'usure défini par la ligne 24, l'extrémité 32 du câble d'alerte est libéré par un mécanisme similaire à celui du câble d'avertissement. On est alors au second niveau d'information sur l'usure de la garniture.
Dans cette configuration il est utile, ainsi qu'illustré sur cette figure, que les portions de câbles situées à l'intérieur de la garniture soient positionnées de façon axiale par rapport à la garniture.
Cette configuration est particulièrement avantageuse en ce qu'elle permet au constructeur de fixer le seuil intermédiaire d'usure à partir duquel il veut être averti, et de positionner le point de fixation 43 au niveau de ce seuil d'usure.

Dans la deuxième configuration, illustrée sur la figure 4, les extrémités des deux câbles sont fixées à l'intérieur de la garniture via un unique point de fixation 25. Les deux câbles sont installés de part et d'autre de ce point de fixation, le câble d'avertissement 23 étant situé entre le câble d'alerte 22 et le disque de frein. Ainsi, lors d'une usure de frein, la mise en contact du point de fixation 25 avec le disque de frein provoquera en premier lieu une libération du câble d'avertissement 23, avant de provoquer ultérieurement une libération du câble d'alerte 22. On retrouve donc bien, une fois encore, un témoin d'usure présentant deux niveaux d'information.

Il convient de noter que, dans les configurations montrées sur les deux figures 3 et 4, les câbles sont directement noyés dans la garniture de frein. Une telle réalisation permet de diminuer les coûts de fabrication et de simplifier l'installation du témoin sur la garniture, puisque aucun élément supplémentaire n'est nécessaire.

Les figures 5 et 6 montrent des exemples de réalisation de la troisième configuration précédemment décrite.
Dans cette configuration, les extrémités des câbles d'alerte et d'avertissement sont liées, les deux câbles formant ainsi un câble unique.
Une extrémité du câble d'avertissement 23 est fixée dans la garniture de frein 20 via un point de fixation 35, par exemple un point de sertissage.
Les deux câbles sont insérés dans un support de câble 36, solidaire du porte-garniture 21 et de la garniture 20. Le câble d'alerte est pincé par une agrafe 37 maintenu en position par le support 36.
Ainsi, lorsque la garniture atteint le seuil intermédiaire d'usure le point de fixation 35 est détruit, provoquant la libération du câble d'avertissement, maintenu dans la garniture par ce seul point de fixation. Le câble d'alerte, en revanche, est fixé à la garniture via l'agrafe et 37 et le support 36. La destruction du point de fixation 35 n'a donc pas pour effet de libérer ce câble.
En revanche, lorsque l'usure atteint le seuil maximal, l'agrafe est, à son tour, détériorée, et n'exerce alors plus sa fonction de maintien du câble d'alerte 22, qui se retrouve libre.
Le support 36 peut être composé d'une seule pièce, comme sur la figure 5, ou d'un ensemble de pièces, par exemple deux comme sur la figure 6.
Dans cette configuration, il est possible d'utiliser aussi bien un positionnement axial des câbles, tel que montré sur la figure 5, qu'un positionnement radial, illustré sur la figure 6.

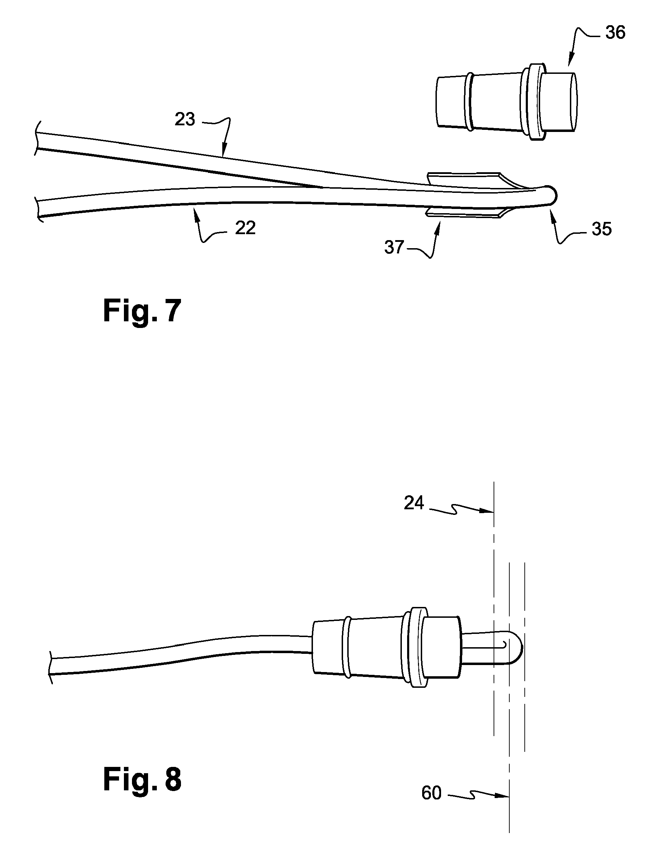

Les figures 7 et 8 permettent de montrer plus en détail un témoin d'usure selon cette variante, ainsi que l'agrafe 37 et le support 36 utilisés.
Sur la figure 8, on voit apparaître les deux seuils de libération des câbles, à savoir le seuil d'avertissement 60 et le seuil d'alerte 24. Les autres éléments de ces figures correspondent aux éléments portant les mêmes numéros de référence sur les figures 5 et 6.

On constate que, dans cette configuration, il est nécessaire que les câbles soient insérés dans un support fixé à la garniture de frein puisque ce support 36 permet, outre le passage des câbles, le maintien de l'agrafe 37 sur le câble d'alerte.

Lors du montage d'un témoin d'usure conforme à l'invention sur une garniture destinée à un frein à étrier coulissant, il convient de s'assurer des éléments suivants :
- la proximité de la roue, des éléments de train et transmission,
- le coulissement de l'étrier et la course liée à l'usure des garnitures, et
- des problèmes de température, de convexion de la chaleur de freinage et de température du disque.

## Revendications

1. Témoin d'usure de garniture (20) de frein à disque, comportant un câble (22), dit câble d'alerte, installé sur la garniture (20) de frein de façon telle que :
- une extrémité (32) du câble est fixée solidairement, par un dispositif de fixation (42), dit d'alerte, dans la garniture (20) de frein,
- une extrémité (52) du câble est située à l'extérieur de la garniture (20) de frein
- le dispositif de fixation d'alerte (42) est positionné au niveau d'une zone correspondant à un seuil maximal d'usure (24), de façon que, lors d'une usure de la garniture de frein, l'atteinte de ce seuil provoque une libération de l'extrémité (32) du câble correspondante,
**caractérisé en ce qu'**il comporte un second câble (23), dit câble d'avertissement, installé de façon telle que :
- une extrémité du câble (33) est fixée solidairement, par un dispositif de fixation (43), dit d'avertissement, dans la garniture de frein,
- une extrémité du câble (53) est située à l'extérieur de la garniture de frein, et
- le dispositif de fixation d'avertissement est positionné au niveau d'une zone correspond à seuil d'usure d'avertissement (60), inférieur au seuil maximal d'usure (24), de façon que, lors d'une usure de la garniture de frein, l'atteinte de ce seuil provoque une libération de l'extrémité (33) du câble correspondante.

2. Témoin d'usure selon la revendication 1, **caractérisé en ce que** :
- le dispositif de fixation d'avertissement et le dispositif de fixation d'alerte sont confondus de manière à former un dispositif unique de fixation (25),
- les câbles d'alerte et d'avertissement sont situés de part et d'autre du dispositif de fixation (25), le câble d'avertissement (23) étant situé entre le câble d'alerte (22) et le disque de frein.

3. Témoin d'usure selon la revendication 1, **caractérisé en ce que**
- les extrémités de chacun des câbles situées à l'intérieur de la garniture de frein sont liées de manière à former un seul câble,
- le dispositif de fixation d'avertissement (35) est positionné au niveau de la liaison entre les deux câbles, et
- le dispositif de fixation d'alerte est positionné sur le câble d'alerte, entre le dispositif de fixation d'avertissement et le porte-garniture.

4. Témoin d'usure selon la revendication 3, **caractérisé en ce que** le dispositif de fixation d'alerte comprend une agrafe (37) maintenue sur le câble d'alerte par un support de câbles (36) fixé sur le porte-garniture et sur la garniture.

5. Témoin d'usure selon l'une des revendications précédentes, **caractérisé en ce que** le dispositif de fixation d'alerte et/ou d'avertissement consiste en un point de sertissage du câble sur la garniture de frein.

6. Témoin d'usure selon l'une des revendications 3 à 5, **caractérisé en ce que** les portions des câbles d'alerte et/ou d'avertissement comprises dans la garniture de frein sont installés de façon radiale.

7. Témoin d'usure selon l'une des revendications 3 à 6, **caractérisé en ce que** les portions de câbles d'alerte et/ou d'avertissement comprises dans la garniture de frein sont positionnées de façon axiale.

8. Témoin d'usure selon l'une des revendications précédentes, **caractérisé en ce que** le ou les câbles sont directement noyés dans la garniture.

9. Témoin d'usure selon l'une des revendications précédentes, **caractérisé en ce que** le ou les câbles sont installés dans un support de câble fixé sur le porte-garniture et sur la garniture.

10. Garniture pour frein à disque, munie d'un témoin d'usure selon l'une des revendications 1 à 9.
